# EUROPEAN PATENT APPLICATION

(11) **EP 3 955 589 A1**
(43) Date of publication of application: **16.02.2022**
(21) Application number: 20788216.8
(22) Date of filing: 10.02.2020
(51) Int. Cl.: H04R 1/10, H04R 3/00, G10L 21/0272, G10L 15/20, G10L 25/84

(54) **SIGNAL PROCESSING DEVICE, SIGNAL PROCESSING METHOD, AND PROGRAM**

(30) Priority: 08.04.2019 JP 2019073542
(71) Applicant: Sony Group Corporation, Tokyo 108-0075 (JP)
(72) Inventor: HIROE, Atsuo, Tokyo 108-0075 (JP)
(74) Representative: 2SPL Patentanwälte PartG mbB
(86) International application number: PCT/JP2020/005061
(87) International publication number: WO 2020/208926

(57) **Abstract**

A signal processing device includes: an input unit to which a microphone signal including a mixed sound in which a target sound and a sound other than the target sound are mixed and a one-dimensional time-series signal acquired by an auxiliary sensor and synchronized with the target sound are input; and a sound source extraction unit that extracts a target sound signal corresponding to the target sound from the microphone signal on the basis of the one-dimensional time-series signal.

## Description

### TECHNICAL FIELD

The present disclosure relates to a signal processing device, a signal processing method, and a program.

### BACKGROUND ART

A technology for extracting a voice uttered by a user from a mixed sound in which the voice uttered by the user and other voices (e.g., ambient noise) are mixed has been developed (see, for example, Non-patent documents 1 and 2).

### CITATION LIST

### NON-PATENT DOCUMENT

Non-Patent Document 1: A. Ephrat, I. Mosseri, O. Lang, T. Dekel, K. Wilson, A. Hassidim, W. Freeman, M. Rubinstein, "Looking to Listen at the Cocktail Party: A Speaker-Independent Audio-Visual Model for Speech Separation", [online], August 9, 2018, [searched on April 5, 2019], Internet <URL: https://arxiv.org/abs/1804.03619>

Non-Patent Document 2: M. Delcroix, K. Zmolikova, K. Kinoshita, A. Ogawa, T. Nakatani, "Single Channel Target Speaker Extraction and Recognition with Speaker Beam", 2018 IEEE International Conference on Acoustics, Speech and Signal Processing (ICASSP), p. 5554 -5558, 2018

### SUMMARY OF THE INVENTION

### PROBLEMS TO BE SOLVED BY THE INVENTION

In this field, it is desired that a sound to be extracted (hereinafter appropriately referred to as target sound) can be appropriately extracted from a mixed sound in which the target sound and sounds other than the target sound are mixed.

The present disclosure has been made in view of the above-described point, and relates to a signal processing device, a signal processing method, and a program that enable appropriate extraction of a target sound from a mixed sound in which the target sound and sounds other than the target sound are mixed.

### SOLUTIONS TO PROBLEM

The present disclosure is, for example,
a signal processing device including:
an input unit to which a microphone signal including a mixed sound in which a target sound and a sound other than the target sound are mixed and a one-dimensional time-series signal acquired by an auxiliary sensor and synchronized with the target sound are input; and
a sound source extraction unit that extracts a target sound signal corresponding to the target sound from the microphone signal on the basis of the one-dimensional time-series signal.

Additionally, the present disclosure is, for example,
a signal processing method including:
inputting a microphone signal including a mixed sound in which a target sound and a sound other than the target sound are mixed and a one-dimensional time-series signal acquired by an auxiliary sensor and synchronized with the target sound to an input unit; and
extracting a target sound signal corresponding to the target sound from the microphone signal on the basis of the one-dimensional time-series signal by a sound source extraction unit.

Additionally, the present disclosure is, for example,
a program for causing a computer to execute a signal processing method including:
inputting a microphone signal including a mixed sound in which a target sound and a sound other than the target sound are mixed and a one-dimensional time-series signal acquired by an auxiliary sensor and synchronized with the target sound to an input unit; and
extracting a target sound signal corresponding to the target sound from the microphone signal on the basis of the one-dimensional time-series signal by a sound source extraction unit.

### BRIEF DESCRIPTION OF DRAWINGS

Fig. 1 is a diagram for describing a configuration example of a signal processing system according to an embodiment.
Figs. 2A to 2D are diagrams to be referred to in describing an outline of processing performed by a signal processing device according to the embodiment.
Fig. 3 is a diagram for describing a configuration example of the signal processing device according to the embodiment.
Fig. 4 is a diagram for explaining an aspect of the signal processing device according to the embodiment.
Fig. 5 is a diagram for describing another aspect of the signal processing device according to the embodiment.
Fig. 6 is a diagram for describing another aspect of the signal processing device according to the embodiment.
Fig. 7 is a diagram for describing a detailed configuration example of a sound source extraction unit according to the embodiment.
Fig. 8 is a diagram for describing a detailed configuration example of a feature amount generation unit according to the embodiment.
Figs. 9A to 9C are diagrams to be referred to in describing processing performed by a short-time Fourier transform unit according to the embodiment.
Fig. 10 is a diagram for describing a detailed configuration example of an extraction model unit according to the embodiment.
Fig. 11 is a diagram for 11 describing a detailed configuration example of a reconstruction unit according to the embodiment.
Fig. 12 is a diagram that to be referred to in describing a learning system according to the embodiment.
Fig. 13 is a diagram illustrating learning data according to the embodiment.
Fig. 14 is a diagram to be referred to in describing a specific example of an air conduction microphone and an auxiliary sensor according to the embodiment.
Fig. 15 is a diagram to be referred to in describing another specific example of the air conduction microphone and the auxiliary sensor according to the embodiment.
Fig. 16 is a flowchart illustrating a flow of overall processing performed by the signal processing device according to the embodiment.
Fig. 17 is a flowchart illustrating a flow of processing performed by the sound source extraction unit according to the embodiment.
Fig. 18 is a diagram to be referred to in describing a modification.
Fig. 19 is a diagram to be referred to in describing the modification.
Fig. 20 is a diagram to be referred to in describing the modification.
Fig. 21 is a diagram to be referred to in describing the modification.
Fig. 22 is a diagram to be referred to in describing a modification.

### MODE FOR CARRYING OUT THE INVENTION

Hereinafter, embodiments and the like of the present disclosure will be described with reference to the drawings. Note that the description will be given in the following order.

### <1. Embodiment>

### <2. Modification>

The embodiments and the like described below are preferable specific examples of the present disclosure, and the contents of the present disclosure are not limited to these embodiments and the like.

### <1. Embodiment>

### [Outline of Present Disclosure]

First, an outline of the present disclosure will be described. The present disclosure is a type of sound source extraction with teaching, and includes a sensor (auxiliary sensor) for acquiring teaching information, in addition to a microphone (air conduction microphone) for acquiring a mixed sound. As an example of the auxiliary sensor, any one or a combination of two or more of the following is conceivable. (1) Another air conduction microphone installed (attached) in a position where the target sound can be acquired in a state where the target sound is dominant over the interference sound, such as the ear canal, (2) a microphone that acquires a sound wave propagating in a region other than the atmosphere, such as a bone conduction microphone or a throat microphone, and (3) a sensor that acquires a signal that is a modal other than sound and is synchronized with the user's utterance. The auxiliary sensor is attached to a target sound generation source, for example. In the example of (3) above, vibration of the skin near the cheek and throat, movement of muscles near the face, and the like are considered as signals synchronized with the user's utterance. A specific example of the auxiliary sensor that acquires these signals will be described later.

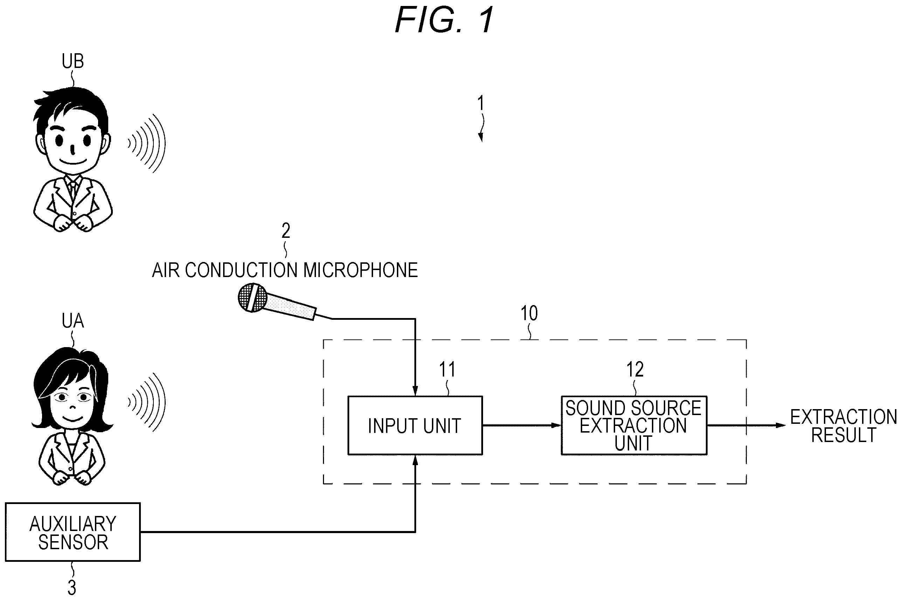

Fig. 1 illustrates a signal processing system (signal processing system 1) according to an embodiment of the present disclosure. The signal processing system 1 includes a signal processing device 10. The signal processing device 10 basically has an input unit 11 and a sound source extraction unit 12. Additionally, the signal processing system 1 has an air conduction microphone 2 and an auxiliary sensor 3 that collect sound. The air conduction microphone 2 and the auxiliary sensor 3 are connected to the input unit 11 of the signal processing device 10. The air conduction microphone 2 and the auxiliary sensor 3 are connected to the input unit 11 in a wired or wireless manner. The auxiliary sensor 3 is a sensor attached to a target sound generation source, for example. The auxiliary sensor 3 in the present example is disposed in the vicinity of a user UA, and specifically, is worn on the body of the user UA. The auxiliary sensor 3 acquires a one-dimensional time-series signal synchronized with a target sound to be described later. Teaching information is obtained on the basis of such a time-series signal.

The target sound to be extracted by the sound source extraction unit 12 in the signal processing system 1 is a voice uttered by the user UA. The target sound is always a voice and is a directional sound source. An interference sound source is a sound source that emits an interference sound other than the target sound. This may be a voice or a non-voice, and there may even be a case where both signals are generated by the same sound source. The interference sound source is a directional sound source or a nondirectional sound source. The number of interference sound sources is zero or an integer of one or more. In the example illustrated in Fig. 1, a voice uttered by a user UB is illustrated as an example of the interference sound. It goes without saying that noise (e.g., door opening and closing sound, sound of helicopter circling overhead, sound of crowd in place where many people exist, and the like) can also be an interference sound. The air conduction microphone 2 is a microphone that records sound transmitted through the atmosphere, and acquires a mixed sound of a target sound and an interference sound. In the following description, the acquired mixed sound is appropriately referred to as a microphone observation signal.

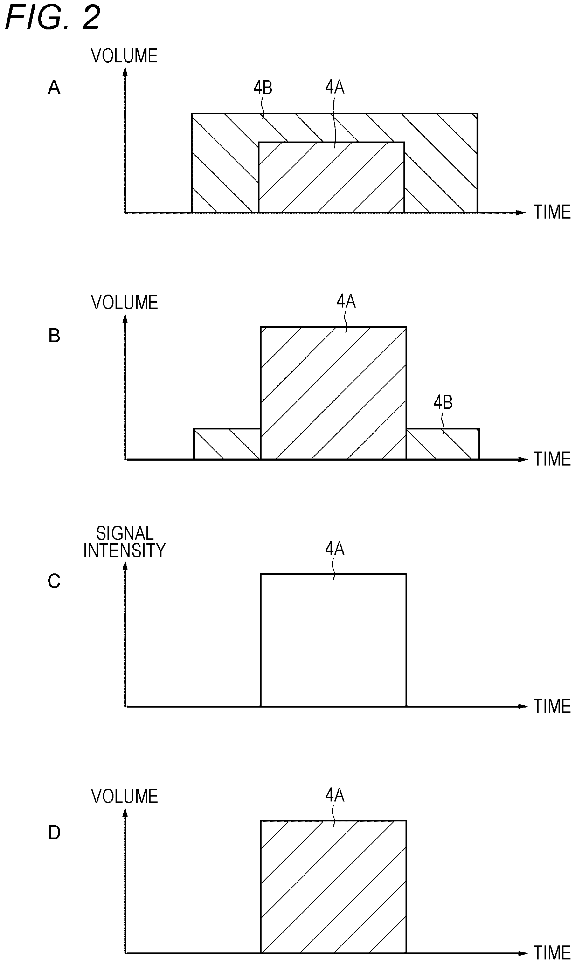

Next, an outline of processing performed by the signal processing device 10 will be described with reference to Figs. 2A to 2D. In Figs. 2A to 2D, the horizontal axis represents time, and the vertical axis represents volume (or power).

Fig. 2A is an image diagram of a microphone observation signal. A microphone observation signal is a signal in which a component 4A derived from a target sound and a component 4B derived from an interference sound are mixed.

Fig. 2B is an image diagram of teaching information. In the present example, it is assumed that the auxiliary sensor 3 is another air conduction microphone installed at a position different from the air conduction microphone 2. Accordingly, the one-dimensional time-series signal acquired by the auxiliary sensor 3 is a sound signal. Such a sound signal is used as teaching information. Fig. 2B is similar to Fig. 1 in that the target sound and the interference sound are mixed, but since the attachment position of the auxiliary sensor 3 is on the user's body, the component 4A derived from the target sound is observed to be more dominant than the component 4B derived from the interference sound.

Fig. 2C is another image diagram of teaching information. In the present example, it is assumed that the auxiliary sensor 3 is a sensor other than an air conduction microphone. Examples of a signal acquired by a sensor other than an air conduction microphone include a sound wave that is acquired by a bone conduction microphone, a throat microphone, or the like and propagates in the user's body, vibration of the skin surface of the user's cheek, throat, and the like, and myoelectric potential and acceleration of muscles near the user's mouth, which are acquired by a sensor other than a microphone. Since these signals do not propagate in the atmosphere, it is considered that the signals are hardly affected by interference sound. For this reason, the teaching information mainly includes the component 4A derived from the target sound. That is, the signal intensity rises as the user starts the utterance and falls as the utterance ends.

Since the teaching information is acquired in synchronization with the utterance of the target sound, the timing of the rise and fall of the component 4A derived from the target sound and the component 4B derived from the target sound is the same as that of the component 4A derived from the target sound.

As illustrated in Fig. 1, the sound source extraction unit 12 of the signal processing device 10 receives a microphone observation signal derived from the air conduction microphone 2 and teaching information derived from the auxiliary sensor 3 as inputs, cancels a component derived from an interference sound from the microphone observation signal, and leaves a component derived from the target sound, thereby generating an extraction result.

Fig. 2D is an image of an extraction result. The ideal extraction result includes only the component 4A derived from the target sound. In order to generate such an extraction result, the sound source extraction unit 12 has a model representing association between the extraction result and the microphone observation signal and teaching information. Such a model is learned in advance by a large amount of data.

### [Configuration example of signal processing device]

### (Overall configuration example)

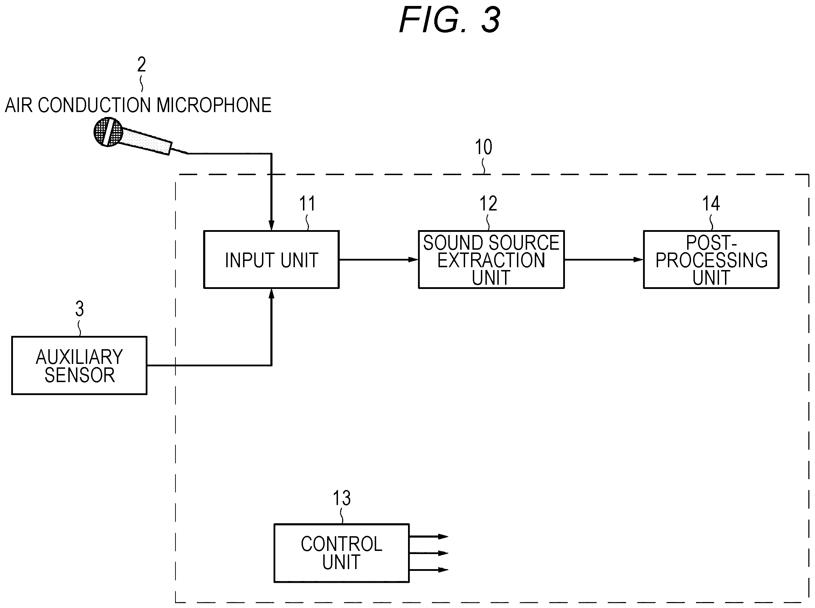

Fig. 3 is a diagram for describing a configuration example of the signal processing device 10 according to the embodiment. As described above, the air conduction microphone 2 observes a mixed sound in which the target sound and the sound (interference sound) other than the target sound transmitted in the atmosphere are mixed. The auxiliary sensor 3 is attached to the user's body and acquires a one-dimensional time-series signal synchronized with the target sound as teaching information. The microphone observation signal collected by the air conduction microphone 2 and the one-dimensional time-series signal acquired by the auxiliary sensor 3 are input to the sound source extraction unit 12 through the input unit 11 of the signal processing device 10. Additionally, the signal processing device 10 has a control unit 13 that integrally controls the signal processing device 10. The sound source extraction unit 12 extracts and outputs a target sound signal corresponding to the target sound from the mixed sound collected by the air conduction microphone 2. Specifically, the sound source extraction unit 12 extracts the target sound signal using the teaching information generated on the basis of the one-dimensional time-series signal. The target sound signal is output to a post-processing unit 14.

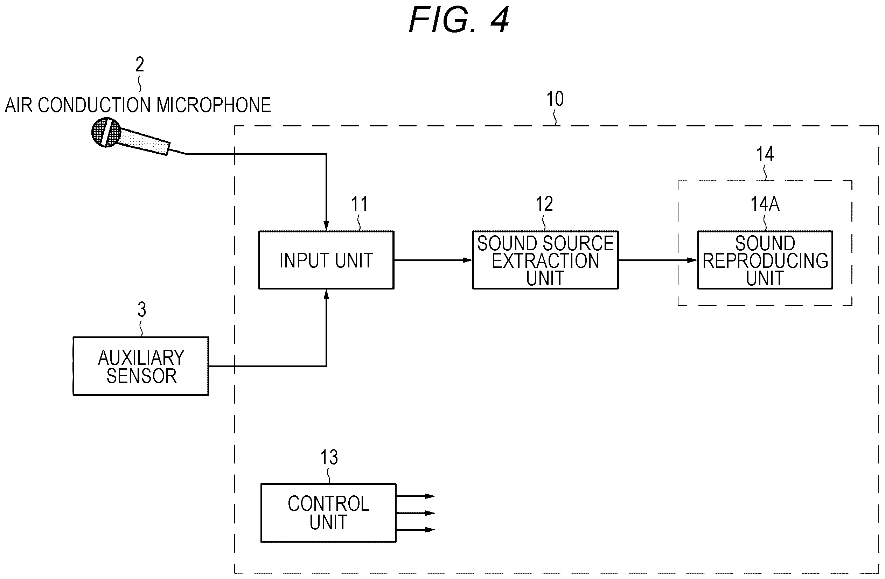

The configuration of the post-processing unit 14 differs depending on the device to which the signal processing device 10 is applied. Fig. 4 illustrates an example in which the post-processing unit 14 includes a sound reproducing unit 14A. The sound reproducing unit 14A has a configuration (amplifier, speaker, or the like) for reproducing a sound signal. In the case of the illustrated example, the target sound signal is reproduced by the sound reproducing unit 14A.

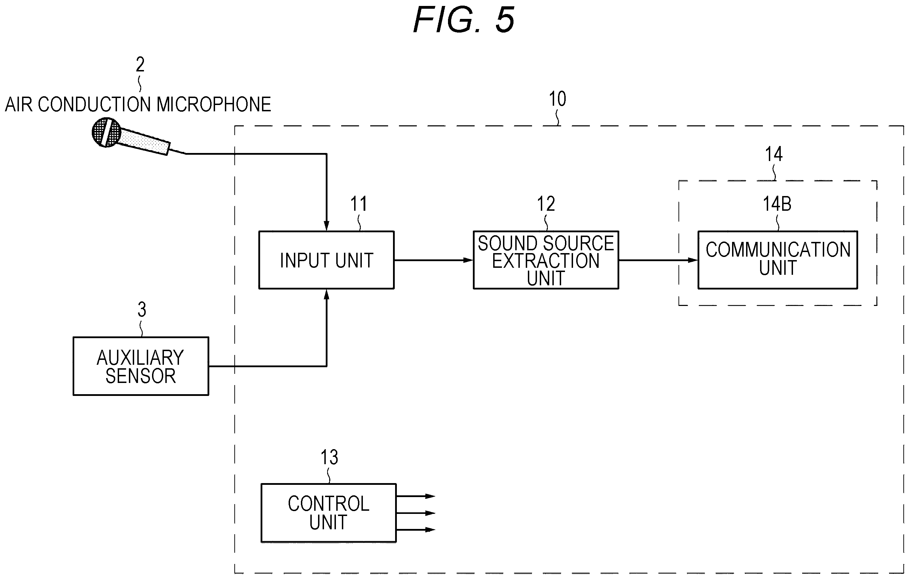

Fig. 5 illustrates an example in which the post-processing unit 14 includes a communication unit 14B. The communication unit 14B has a configuration for transmitting the target sound signal to an external device through a network such as the Internet or a predetermined communication network. In the case of the illustrated example, the target sound signal is transmitted by the communication unit 14B. Additionally, an audio signal transmitted from the external device is received by the communication unit 14B. In the case of the present example, the signal processing device 10 is applied to a communication device, for example.

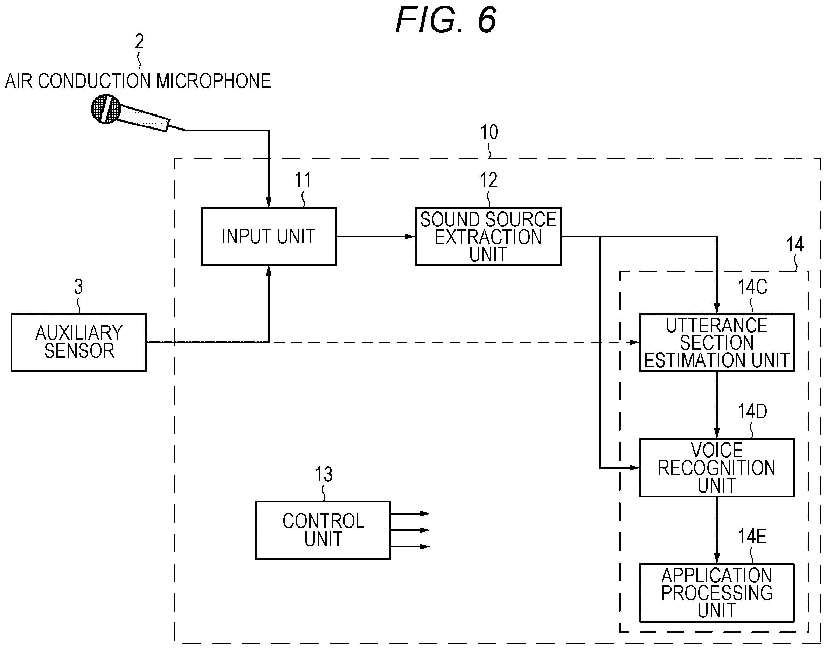

Fig. 6 illustrates an example in which the post-processing unit 14 includes an utterance section estimation unit 14C, a voice recognition unit 14D, and an application processing unit 14E. The signal handled as a continuous stream from the air conduction microphone 2 to the sound source extraction unit 12 is divided into units of utterances by the utterance section estimation unit 14C. As a method of utterance section estimation (or voice section detection), a known method can be applied. Moreover, as the input of the utterance section estimation unit 14C, the signal acquired by the auxiliary sensor 3 may be used in addition to a clean target sound that is the output of the sound source extraction unit 12 (flow of signal acquired by auxiliary sensor 3 in this case is indicated by dotted line in Fig. 6). That is, the utterance section estimation (detection) may be performed by using not only the sound signal but also the signal acquired by the auxiliary sensor 3. As such a method, too, a known method can be applied.

While the utterance section estimation unit 14C can output the divided sound itself, the utterance section estimation unit 14C can also output utterance section information indicating sections such as the start time and end time instead of the sound, and the division itself can be performed by the voice recognition unit 14D using the utterance section information. Fig. 6 is an example assuming the latter form. The voice recognition unit 14D receives the clean target sound that is the output of the sound source extraction unit 12 and section information that is the output of the utterance section estimation unit 14C as inputs, and outputs a word string corresponding to the section as a voice recognition result. The application processing unit 14E is a module associated with processing using the voice recognition result. In an example in which the signal processing device 10 is applied to a voice interaction system, the application processing unit 14E corresponds to a module that performs response generation, voice synthesis, and the like. Additionally, in an example in which the signal processing device 10 is applied to a voice translation system, the application processing unit 14E corresponds to a module that performs machine translation, voice synthesis, and the like.

### (Sound source extraction unit)

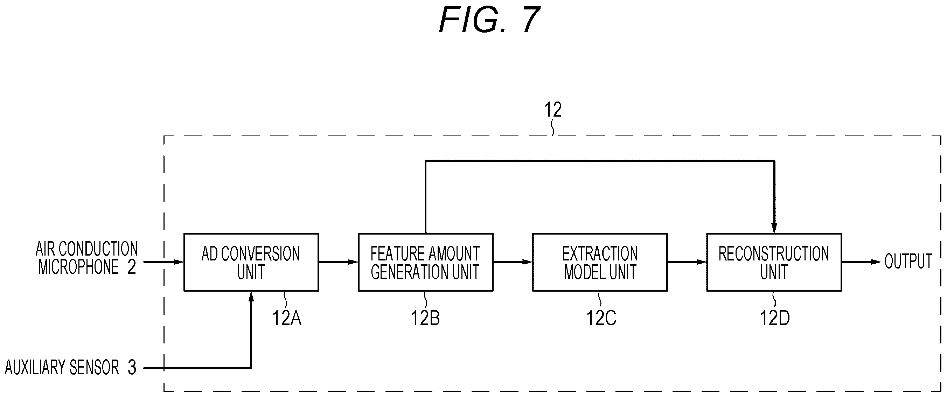

Fig. 7 is a block diagram for describing a detailed configuration example of the sound source extraction unit 12. The sound source extraction unit 12 has, for example, an analog to digital (AD) conversion unit 12A, a feature amount generation unit 12B, an extraction model unit 12C, and a reconstruction unit 12D.

There are two types of inputs for the sound source extraction unit 12. One is a microphone observation signal acquired by the air conduction microphone 2, and the other is teaching information acquired by the auxiliary sensor 3. The microphone observation signal is converted into a digital signal by the AD conversion unit 12A and then sent to the feature amount generation unit 12B. The teaching information is sent to the feature amount generation unit 12B. Although not illustrated in Fig. 7, in a case where the signal acquired by the auxiliary sensor 3 is an analog signal, the analog signal is converted into a digital signal by an AD conversion unit different from the AD conversion unit 12A and then input to the feature amount generation unit 12B. Such a converted digital signal is also one of teaching information generated on the basis of the one-dimensional time-series signal acquired by the auxiliary sensor 3.

The feature amount generation unit 12B receives both the microphone observation signal and the teaching information as inputs, and generates a feature amount to be input to the extraction model unit 12C. The feature amount generation unit 12B also holds information necessary for converting the output of the extraction model unit 12C into a waveform. The model of the extraction model unit 12C is a model in which a correspondence between a clean target sound and a set of a microphone observation signal that is a mixed signal of a target sound and an interference sound and teaching information that is a hint of a target sound to be extracted is learned in advance. Hereinafter, the input to the extraction model unit 12C is appropriately referred to as an input feature amount, and the output from the extraction model unit 12C is appropriately referred to as an output feature amount.

The reconstruction unit 12D converts the output feature amount from the extraction model unit 12C into a sound waveform or a similar signal. At that time, the reconstruction unit 12D receives information necessary for waveform generation from the feature amount generation unit 12B.

### (Details of each configuration of sound source extraction unit)

### "Details of feature amount generation unit"

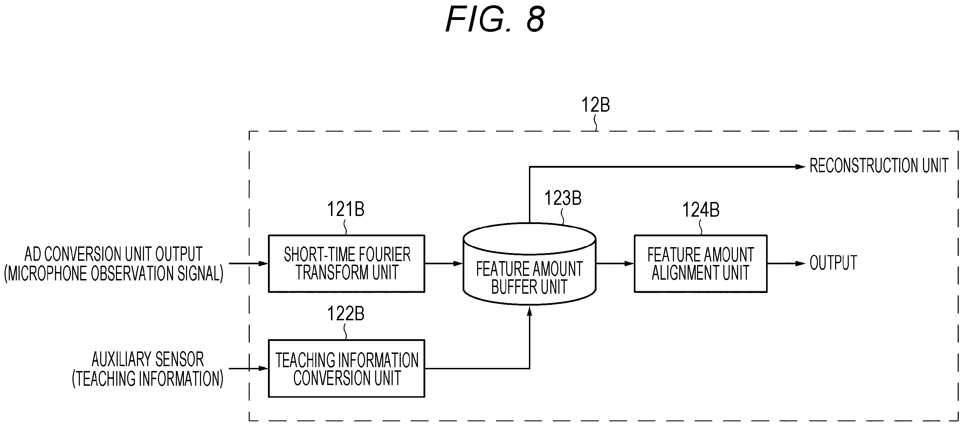

Next, details of the feature amount generation unit 12B will be described with reference to Fig. 8. In Fig. 8, a spectrum or the like is assumed as the feature amount, but other feature amounts can also be used. The feature amount generation unit 12B has a short-time Fourier transform unit 121B, a teaching information conversion unit 122B, a feature amount buffer unit 123B, and a feature amount alignment unit 124B.

There are two types of signals as inputs of the feature amount generation unit 12B. The microphone observation signal converted into a digital signal by the AD conversion unit 12A, which is one input, is input to the short-time Fourier transform unit 121B. Then, the microphone observation signal is converted into a signal in the time-frequency domain, that is, a spectrum, by the short-time Fourier transform unit 121B.

The teaching information from the auxiliary sensor 3, which is the other input, is converted according to the type of signal by the teaching information conversion unit 122B. In a case where the teaching information is a sound signal, the short-time Fourier transform is performed similarly to the microphone observation signal. In a case where the teaching information is modal other than sound, it is possible to perform short-time Fourier transform or use the teaching information without conversion.

The signals converted by the short-time Fourier transform unit 121B and the teaching information conversion unit 122B are stored in the feature amount buffer unit 123B for a predetermined time. Here, the time information and the conversion result are stored in association with each other, and the feature amount can be output in a case where there is a request for acquiring the past feature amount from a module in a subsequent stage. Additionally, regarding the conversion result of the microphone observation signal, since the information is used in waveform generation in a subsequent stage, the conversion result is stored as a group of complex spectra.

The output of the feature amount buffer unit 123B is used in two locations, specifically, in each of the reconstruction unit 12D and the feature amount alignment unit 124B. In a case where the granularity of time is different between the feature amount derived from the microphone observation signal and the feature amount derived from the teaching information, the feature amount alignment unit 124B performs processing of adjusting the granularity of the feature amounts.

For example, assuming that the sampling frequency of the microphone observation signal is 16 kHz and the shift width in the short-time Fourier transform unit 121B is 160 samples, the feature amount derived from the microphone observation signal is generated at a frequency of once every 1/100 seconds. On the other hand, in a case where the feature amount derived from the teaching information is generated at a frequency of once every 1/200 seconds, data in which one set of the feature amount derived from the microphone observation signal and two sets of the feature amount derived from the teaching information are combined is generated, and the generated data is used as input data for one time to the extraction model unit 12C.

Conversely, in a case where the feature amount derived from the teaching information is generated at a frequency of once every 1/50 seconds, data in which two sets of the feature amount derived from the microphone observation signal and one set of the feature amount derived from the teaching information are combined is generated. Moreover, in this stage, conversion from the complex spectrum to the amplitude spectrum and the like are also performed as necessary. The output generated in this manner is sent to the extraction model unit 12C.

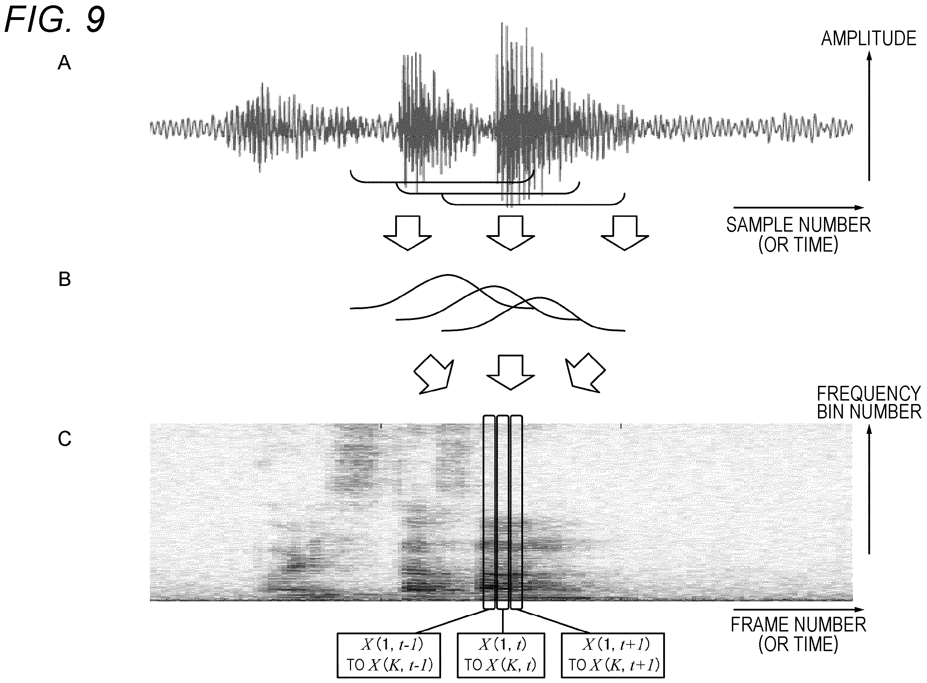

Here, processing performed by the above-mentioned short-time Fourier transform unit 121B will be described with reference to Fig. 9. A fixed length is cut out from the waveform (see Fig. 9A) of the microphone observation signal obtained by the AD conversion unit 12A, and a window function such as a Hanning window or a Hamming window is applied thereto. This cut-out unit is referred to as a frame. By applying the short-time Fourier transform to data for one frame, X (K, t) is obtained from X (1, t), for example, as an observation signal in the time-frequency domain (see Fig. 9B). Note, however, that t represents a frame number, and K represents the total number of frequency bins. There may be an overlap between the cut-out frames, so that the change in the signal in the time-frequency domain is smooth between consecutive frames. A set from X (1, t) to X (K, t), which is data for one frame, is referred to as a spectrum, and a data structure in which multiple spectra is arranged in a time direction is referred to as a spectrogram (see Fig. 9C). In the spectrogram of Fig. 9C, the horizontal axis represents the frame number, the vertical axis represents the frequency bin number, and three spectra (X (1, t-1) to X (K, t-1), X (1, t) to X (K, t), and X (1, t+1) to X (K, t+1)) are generated from Fig. 9A.

### "Details of extraction model unit"

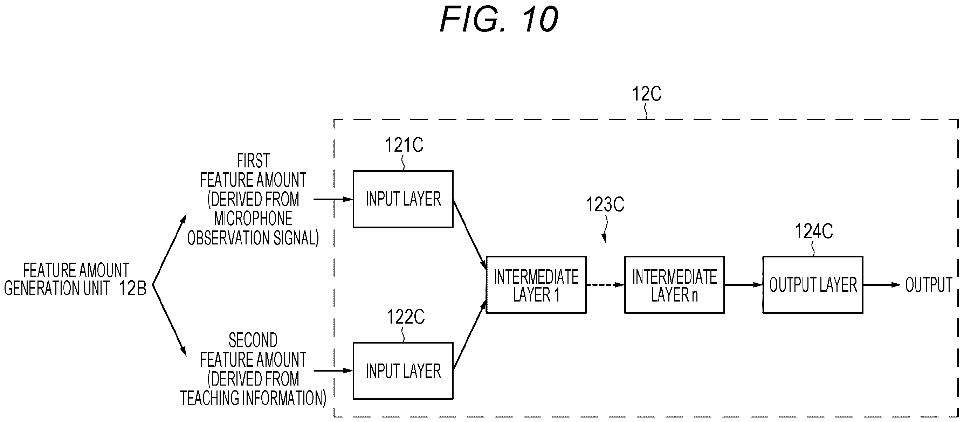

Next, details of the extraction model unit 12C will be described with reference to Fig. 10. The extraction model unit 12C uses the output of the feature amount generation unit 12B as an input. The output of the feature amount generation unit 12B includes two types of data. One is a feature amount derived from a microphone observation signal, and the other is a feature amount derived from teaching information. Hereinafter, the feature amount derived from a microphone observation signal is appropriately referred to as a first feature amount, and the feature amount derived from teaching information is appropriately referred to as a second feature amount.

The extraction model unit 12C includes, for example, an input layer 121C, an input layer 122C, an intermediate layer 123C including intermediate layers 1 to n, and an output layer 124C. The extraction model unit 12C illustrated in Fig. 10 represents a so-called neural network. The reason why the input layer is divided into two layers of the input layer 121C and the input layer 122C is that two types of feature values are input to the corresponding layers.

In the example illustrated in Fig. 10, the input layer 121C is an input layer to which the first feature amount is input, and the input layer 122C is an input layer to which the second feature amount is input. The type and structure (number of layers) of the neural network can be arbitrarily set, and a correspondence between a clean target sound and a set of the first feature amount and the second feature amount is learned in advance by a learning system to be described later.

The extraction model unit 12C receives the first feature amount at the input layer 121C and the second feature amount at the input layer 122C as inputs, and performs predetermined forward propagation processing to generate an output feature amount corresponding to a target sound signal of a clean target sound that is output data. As a type of the output feature amount, an amplitude spectrum corresponding to a clean target sound, a time-frequency mask for generating a spectrum of a clean target sound from a spectrum of a microphone observation signal, or the like can be used.

Note that while the two types of input data are merged in the immediately subsequent intermediate layer (intermediate layer 1) in Fig. 10 the two types of input data may be merged in an intermediate layer even closer to the output layer 124C. In that case, the number of layers from each input layer to the junction may be different, and as an example, a network structure in which one of the input data is input from an intermediate layer may be used. Several types of methods for merging the two types of data in an intermediate layer are conceivable as follows. One is a method of concatenating data in a vector format output from the immediately preceding two layers. Another is a method of multiplying the elements if the number of elements of the two vectors is the same.

### "Details of reconstruction unit"

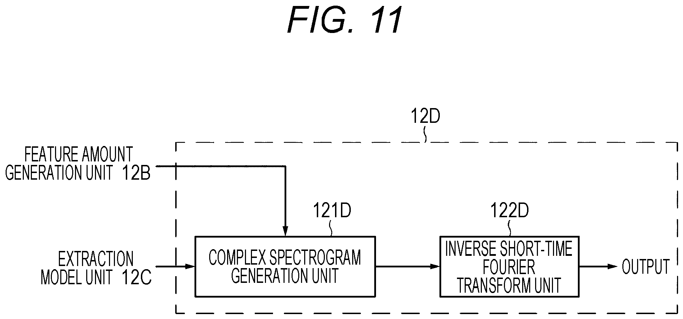

Next, details of the reconstruction unit 12D will be described with reference to Fig. 11. The reconstruction unit 12D converts the output of the extraction model unit 12C into data similar to a sound waveform or a sound. In order to perform such processing, the reconstruction unit 12D receives necessary data from the feature amount buffer unit 123B in the feature amount generation unit 12B as well.

The reconstruction unit 12D has a complex spectrogram generation unit 121D and an inverse short-time Fourier transform unit 122D. The complex spectrogram generation unit 121D integrates the output of the extraction model unit 12C and the data from the feature amount generation unit 12B to generate a complex spectrogram of the target sound. The manner of generation varies depending on whether the output of the extraction model unit is an amplitude spectrum or a time-frequency mask. In the case of the amplitude spectrum, since the phase information is missing, it is necessary to add (restore) the phase information in order to convert the amplitude spectrum into a waveform. A known technology can be applied to restore the phase. For example, a complex spectrum of a microphone observation signal at the same timing is acquired from the feature amount buffer unit 123B, and phase information is extracted therefrom and synthesized with an amplitude spectrum to generate a complex spectrum of a target sound.

On the other hand, in the case of the time-frequency mask, the complex spectrum of the microphone observation signal is similarly acquired, and then the time-frequency mask is applied to the complex spectrum (multiplied for each time-frequency) to generate the complex spectrum of the target sound. For application of the time-frequency mask, known methods (e.g., method described in Japanese Patent Laid-Open 2015-55843) can be used.

The inverse short-time Fourier transform unit 122D converts the complex spectrum into a waveform. Inverse short-time Fourier transform includes inverse Fourier transform, overlap-add method, and the like. As these methods, known methods (e.g., method described in Japanese Patent Laid-Open 2018-64215) can be applied.

Note that depending on the module in the subsequent stage, the data can be converted into data other than the waveform in the reconstruction unit 12D, or the reconstruction unit 12D itself can be omitted. For example, in a case where the module in the subsequent stage is utterance section detection and voice recognition, and the feature amount used in the stage is an amplitude spectrum or data that can be generated therefrom, the reconstruction unit 12D only needs to convert the output of the extraction model unit 12C into an amplitude spectrum. Moreover, in a case where the extraction model unit 12C outputs the amplitude spectrum itself, the reconstruction unit 12D itself may be omitted.

### (Learning system of extraction model unit)

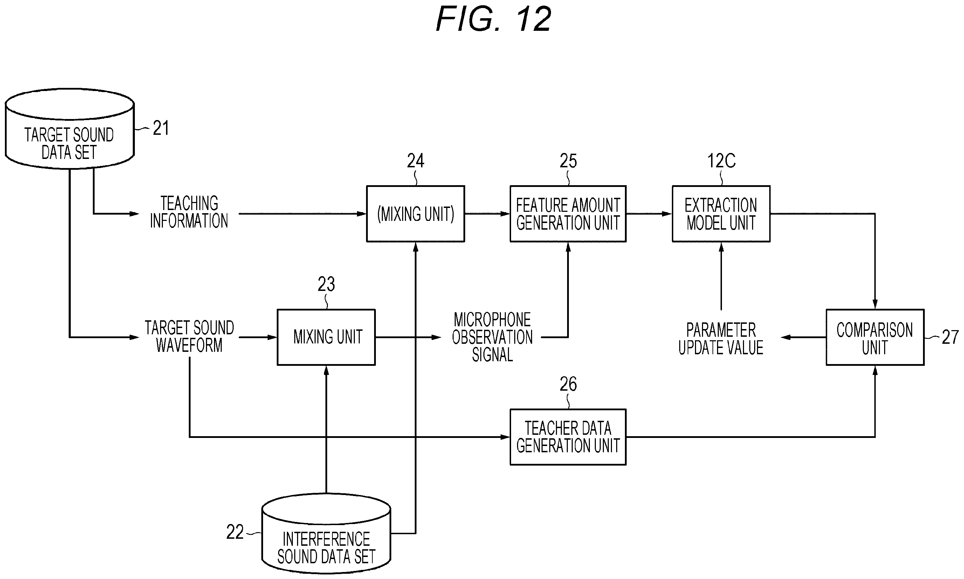

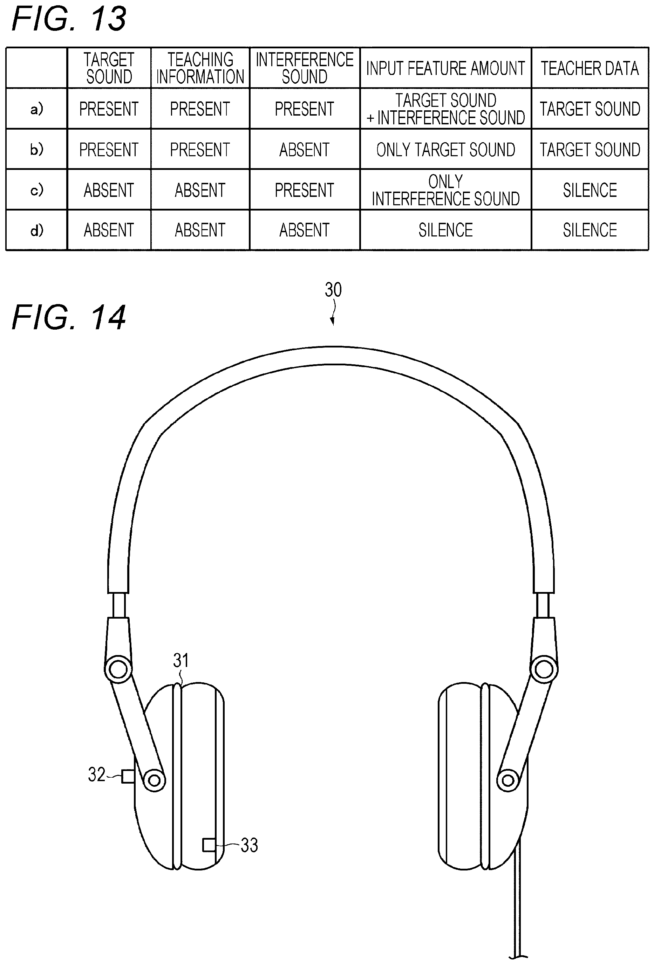

Next, a learning system of the extraction model unit 12C will be described with reference to Figs. 12 and 13. Such a learning system is used to perform predetermined learning on the extraction model unit 12C in advance. While the learning system described below is assumed to be a system different from the signal processing device 10 except for the extraction model unit 12C, a configuration related to the learning system may be incorporated in the signal processing device 10.

The basic operation of the learning system is as described in the following (1) to (3), for example, and repeating the processes of (1) to (3) is referred to as learning. (1) Input feature amount and teacher data (ideal output feature amount for input feature amount) are generated from a target sound data set 21 and an interference sound data set 22. (2) The input feature amount is input to the extraction model unit 12C, and the output feature amount is generated by forward propagation. (3) The output feature amount is compared with the teacher data, and the parameter in the extraction model is updated so as to reduce error, in other words, so as to minimize the loss value in the loss function.

Hereinafter, the pair of the input feature amount and the teacher data is appropriately referred to as learning data. There are four types of learning data as illustrated in Fig. 13. In this figure, (a) is data for learning to extract a target sound in a case where the target sound and an interference sound are mixed, (b) is data for causing an utterance in a quiet environment to be output without deterioration, (c) is data for causing a silence to be output in a case where the user is not uttering, and (d) is data for causing a silence to be output in a case where the user is not uttering anything in a quiet environment. Note that "absent" in the teaching information of Fig. 13 means that the signal itself exists but does not include a component derived from the target sound.

These four types of learning data are generated at a predetermined ratio depending on the case. Alternatively, as will be described later, by including a sound close to silence recorded in a quiet environment in a data set of a target sound and an interference sound, all combinations may be generated without applying data depending on the case.

Hereinafter, modules included in the learning system and operations thereof will be described. The target sound data set 21 is a group including a pair of a target sound waveform and teaching information synchronized with the target sound waveform. Note, however, that for the purpose of generating learning data corresponding to (c) in Fig. 13 or learning data corresponding to (d) in Fig. 13, a pair of a microphone observation signal when a person is not uttering in a quiet place and an input signal of an auxiliary sensor corresponding thereto is also included in this data set.

The interference sound data set 22 is a group including sounds that can be interference sounds. Since a voice can also be an interference sound, the interference sound data set 22 includes both voice and non-voice. Moreover, in order to generate learning data corresponding to (b) in Fig. 13 and learning data corresponding to (d) in Fig. 13, a microphone observation signal observed in a quiet place is also included in this data set. At the time of learning, one of the pairs including a target sound waveform and teaching information is randomly extracted from the target sound data set 21. The teaching information is input to a mixing unit 24 in a case where the teaching information is acquired by the air conduction microphone, but is directly input to a feature amount generation unit 25 in a case where the teaching information is acquired by a sensor other than the air conduction microphone. The target sound waveform is input to each of a mixing unit 23 and the teacher data generation unit 26. On the other hand, one or more sound waveforms are randomly extracted from the interference sound data set 22, and the sound waveforms are input to the mixing unit 23. In a case where the auxiliary sensor is a device other than the air conduction microphone, the waveform extracted from the interference sound data set 22 is also input to the mixing unit 24.

The mixing unit 23 mixes the target sound waveform and one or more interference sound waveforms at a predetermined mixing ratio (signal noise ratio (SN ratio)). The mixing result corresponds to a microphone observation signal and is sent to the feature amount generation unit 25. The mixing unit 24 is a module applied in a case where the auxiliary sensor 3 is an air conduction microphone, and mixes interference sound with teaching information that is a sound signal at a predetermined mixing ratio. The reason why the interference sound is mixed in the mixing unit 24 is to enable good sound source extraction even if interference sound is mixed in the teaching information to some extent.

There are two types of inputs to the feature amount generation unit 25, one is a microphone observation signal, and the other is teaching information or an output of the mixing unit 24. An input feature amount is generated from these two types of data. The extraction model unit 12C is a neural network before learning and during learning, and has the same configuration as that of Fig. 10. The teacher data generation unit 26 generates teacher data that is an ideal output feature amount. The shape of the teacher data is basically the same as the output feature amount, and is an amplitude spectrum, a time-frequency mask, or the like. Note, however, that as will be described later, a combination in which the output feature amount of the extraction model unit 12C is a time-frequency mask while the teacher data is an amplitude spectrum is also possible.

As illustrated in Fig. 13, the teacher data varies depending on the presence or absence of the target sound and the interference sound. The teacher data is an output feature amount corresponding to the target sound in a case where the target sound is present, and the teacher data is an output feature amount corresponding to silence in a case where the target sound is not present. A comparison unit 27 compares the output of the extraction model unit 12C with the teacher data, and calculates an update value for the parameter included in the extraction model unit 12C so that the loss value in the loss function decreases. As the loss function used in the comparison, a mean square error or the like can be used. As the comparison method and parameter update method, a method known as a neural network learning algorithm can be applied.

### [Specific examples of air conduction microphone and auxiliary sensor]

### (Specific example 1)

Next, specific examples of the air conduction microphone 2 and the auxiliary sensor 3 will be described. Fig. 14 is a diagram illustrating a specific example of the air conduction microphone 2 and the auxiliary sensor 3 in over-ear headphones 30. An outer (side opposite to the pinna side) microphone 32 and an inner (pinna side) microphone 33 are respectively provided on the outer side and the inner side of an ear cup 31 which is a component to be covered on the ear. As the outer microphone 32 and the inner microphone 33, for example, microphones provided for noise cancellation can be applied. As the type of the microphone, both the outside and the inside are air conduction microphones, but have different purposes of use. The outer microphone 32 corresponds to the air conduction microphone 2 described above, and is used to acquire a sound in which a target sound and an interference sound are mixed. The inner microphone 33 corresponds to the auxiliary sensor 3.

Since the human vocal organ is connected to the ear, the utterance (target sound) of the headphone wearer, that is, the user is observed not only by the outer microphone 32 through the atmosphere, but also by the inner microphone 33 through the inner ear and the ear canal. The interference sound is observed not only by the outer microphone 32 but also by the inner microphone 33. However, since the interference sound is attenuated to some extent by the ear cup 31, the sound is observed in a state where the target sound is dominant over the interference sound in the inner microphone 33. However, the target sound observed by the inner microphone 33 passes through the inner ear and thus has a frequency distribution different from that of the sound derived from the outer microphone 32, and a sound (such as swallowing sound) other than utterance generated in the body may be collected. Hence, it is not necessarily appropriate for another person to listen to the sound observed by the inner microphone 33 or to directly input the sound to voice recognition.

In view of the above, the present disclosure solves the problem by using a sound signal observed by the inner microphone 33 as teaching information for sound source extraction. Specifically, the problem is solved for the following reasons (1) to (3). (1) The extraction result is generated from the observation signal of the outer microphone 32 which is the air conduction microphone 2, and further, since the teacher data derived from the air conduction microphone is used at the time of learning, the frequency distribution of the target sound in the extraction result is close to that recorded in a quiet environment. (2) Not only the target sound but also interference sound may be mixed in the sound observed by the inner microphone 33, that is, the teaching information. However, since association is learned using data in which target sound is output from such teaching information and the outer microphone observation signal at the time of learning, the extraction result is a relatively clean voice. (3) Even if the swallowing sound or the like is observed by the inner microphone 33, the sound is not observed by the outer microphone 32 and therefore does not appear in the extraction result.

### (Specific example 2)

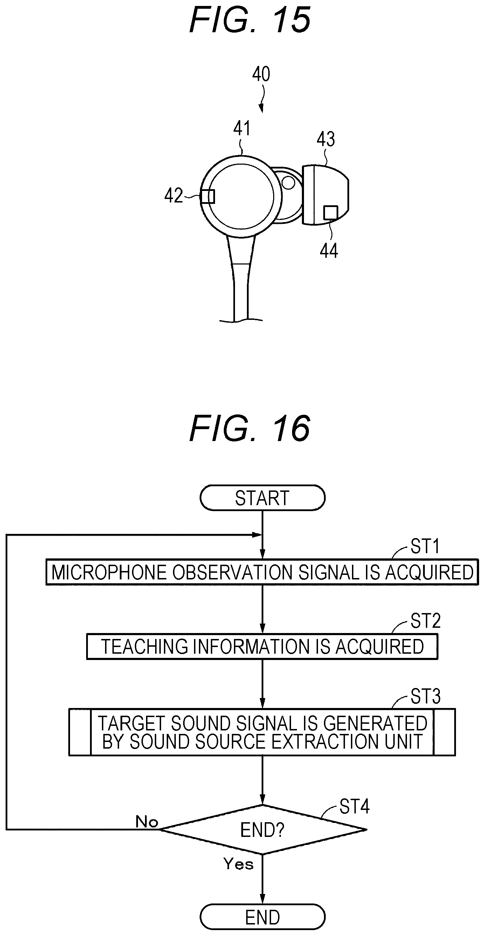

Fig. 15 is a diagram illustrating a specific example of the air conduction microphone 2 and the auxiliary sensor 3 in a single-ear insertion type earphone 40. An outer microphone 42 is provided outside a housing 41. The outer microphone 42 corresponds to the air conduction microphone 2. The outer microphone 42 observes a mixed sound in which a target sound and an interference sound transmitted in the air are mixed.

An earpiece 43 is a portion to be inserted into the user's ear canal. An inner microphone 44 is provided in a part of the earpiece 43. The inner microphone 44 corresponds to the auxiliary sensor 3. In the inner microphone 44, a sound in which a target sound transmitted through the inner ear and an interference sound attenuated through the housing portion are mixed is observed. Since the method of extracting the sound source is similar to that of the headphones illustrated in Fig. 14, redundant description will be omitted.

### (Other Specific Examples)

Note that the auxiliary sensor 3 is not limited to the air conduction microphone, and other types of microphones and sensors other than the microphone can be used.

For example, as the auxiliary sensor 3, a microphone capable of acquiring a sound wave directly propagating in the body, such as a bone conduction microphone or a throat microphone, may be used. Since sound waves propagating in the body are hardly affected by interference sound transmitted in the atmosphere, it is considered that sound signals acquired by these microphones are close to the user's clean utterance voice. However, in practice, similarly to the case of using the inner microphone 33 in the over-ear headphones 30 of Fig. 14, there is a possibility that problems such as a difference in frequency distribution and a swallowing sound occur. In view of the above, the problem is solved by using a bone conduction microphone, a throat microphone, or the like as the auxiliary sensor 3 and extracting a sound source with teaching.

As the auxiliary sensor 3, it is also possible to apply a sensor that detects a signal other than a sound wave, such as an optical sensor. The surface (e.g., muscle) of an object that emits sound vibrates, and in the case of a human body, the skin of the throat and cheek near the vocal organ vibrates according to the voice uttered by the human body. For this reason, by detecting the vibration by an optical sensor in a noncontact manner, it is possible to detect the presence or absence of the utterance itself or estimate the voice itself.

For example, a technology for detecting an utterance section using an optical sensor that detects vibration has been proposed. Additionally, a technology has also been proposed in which brightness of spots generated by applying a laser to the skin is observed by a camera with a high frame rate, and sound is estimated from changes in the brightness. While the optical sensor is used in the present example as well, the detection result by the optical sensor is used not for utterance section detection or sound estimation but for sound source extraction with teaching.

A specific example using an optical sensor will be described. Light emitted from a light source such as a laser pointer or an LED is applied to the skin near the vocal organs such as the cheek, the throat, and the back of the head. Light spots are generated on the skin by applying light. The brightness of the spots is observed by the optical sensor. This optical sensor corresponds to the auxiliary sensor 3, and is attached to the user's body. In order to facilitate light collection, the optical sensor and the light source may be integrated.

In order to facilitate the carrying, the air conduction microphone 2 may be integrated with the light sensor and the light source. A signal acquired by the air conduction microphone 2 is input to the module as a microphone observation signal, and a signal acquired by the optical sensor is input to the module as teaching information.

While the optical sensor that detects vibration is used as the auxiliary sensor 3 in the above example, other types of sensors can be used as long as the sensors acquire a signal synchronized with the user's utterance. Examples thereof include a myoelectric sensor for acquiring a myoelectric potential of muscles near the lower jaw and the lip, an acceleration sensor for acquiring movement near the lower jaw, and the like.

### [Processing flow]

### (Overall processing flow)

Next, a flow of processing performed by the signal processing device 10 according to the embodiment will be described. Fig. 16 is a flowchart illustrating a flow of the overall processing performed by the signal processing device 10 according to the embodiment. When the processing is started, in step ST1, a microphone observation signal is acquired by the air conduction microphone 2. Then, the processing proceeds to step ST2.

In step ST2, teaching information that is a one-dimensional time-series signal is acquired by the auxiliary sensor 3. Then, the processing proceeds to step ST3.

In step ST3, the sound source extraction unit 12 generates an extraction result, that is, a target sound signal, using the microphone observation signal and the teaching information. Then, the processing proceeds to step ST4.

In step ST4, it is determined whether or not the series of processing has ended. Such determination processing is performed by the control unit 13 of the signal processing device 10, for example. If the series of processing has not ended, the processing returns to step ST1, and the above-described processing is repeated.

Note that although not illustrated in Fig. 16, the processing by the post-processing unit 14 is performed after the target sound signal is generated by the processing according to step ST3. As described above, the processing by the post-processing unit 14 is processing (talk, recording, voice recognition, and the like) according to the device to which the signal processing device 10 is applied.

### (Flow of processing by sound source extraction unit)

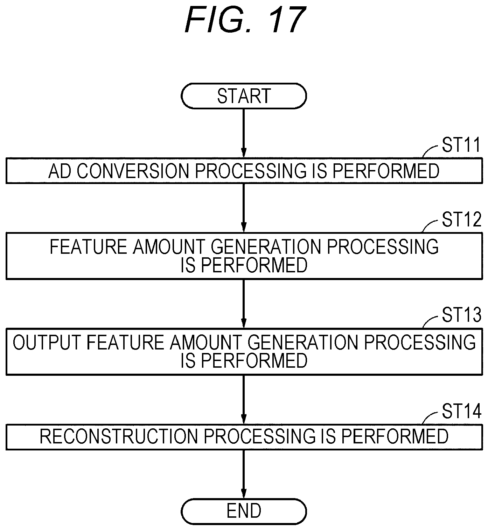

Next, the flow of processing by the sound source extraction unit 12 performed in step ST3 in Fig. 16 will be described with reference to the flowchart in Fig. 17.

When the processing is started, in step ST11, AD conversion processing by the AD conversion unit 12A is performed. Specifically, an analog signal acquired by the air conduction microphone 2 is converted into a microphone observation signal that is a digital signal. Additionally, in a case where a microphone is applied as the auxiliary sensor 3, an analog signal acquired by the auxiliary sensor 3 is converted into teaching information that is a digital signal. Then, the processing proceeds to step ST12.

In step ST12, feature amount generation processing is performed by the feature amount generation unit 12B. Specifically, the microphone observation signal and the teaching information are converted into input feature amounts by the feature amount generation unit 12B. Then, the processing proceeds to step ST13.

In step ST13, output feature amount generation processing by the extraction model unit 12C is performed. Specifically, the input feature amount generated in step ST12 is input to a neural network that is an extraction model, and predetermined forward propagation processing is performed to generate an output feature amount. Then, the processing proceeds to step ST14.

In step ST14, reconstruction processing by the reconstruction unit 12D is performed. Specifically, generation of a complex spectrum, inverse short-time Fourier transform, or the like is applied to the output feature amount generated in step ST13, so that a target sound signal that is a sound waveform or similar data is generated. Then, the processing ends.

Note that data other than the sound waveform may be generated or the reconstruction processing itself may be omitted depending on processing subsequent to the sound source extraction processing. For example, in a case where voice recognition is performed in a subsequent stage, a feature amount for voice recognition may be generated in the reconstruction processing, or an amplitude spectrum may be generated in the reconstruction processing to generate a feature amount for voice recognition from the amplitude spectrum in voice recognition. Moreover, when the extraction model is learned to output an amplitude spectrum, the reconstruction processing itself may be skipped.

Note that the processing order of some of the pieces of processing illustrated in the above-described flowchart may be changed, or multiple pieces of processing may be performed in parallel.

### [Effects obtained by embodiment]

According to the present embodiment the following effects can be obtained, for example.

The signal processing device 10 according to the embodiment includes the air conduction microphone 2 that acquires a mixed sound (microphone observation signal) in which a target sound and an interference sound are mixed, and the auxiliary sensor 3 that acquires a one-dimensional time series synchronized with a user's utterance. By performing sound source extraction with teaching using the signal acquired by the auxiliary sensor 3 as teaching information on the microphone observation signal, in a case where the interference sound is a voice, only the user's utterance can be selectively extracted, and in a case where the interference sound is a non-voice, it is possible to extract with high accuracy as the information amount of the input data increases as compared with a case where there is no teaching information.

The sound source extraction with teaching uses a model in which a correspondence between a clean target sound and input data that is a microphone observation signal and teaching information is learned in advance. For this reason, the teaching information may include interference sound as long as the sound is similar to the data used at the time of learning. Moreover, the teaching information may be sound or may be in a form other than sound. That is, since the teaching information does not need to be sound, an arbitrary one-dimensional time-series signal synchronized with the utterance can be used as the teaching information.

Additionally, according to the present embodiment, the minimum number of sensors is two, that is, the air conduction microphone 2 and the auxiliary sensor 3. For this reason, the system itself can be downsized as compared with a case where the sound source is extracted by beamforming processing using a large number of air conduction microphones. Additionally, since the auxiliary sensor 3 can be carried, the embodiment can be applied to various scenes.

For example, it is also conceivable to apply a signal that is not a one-dimensional time-series signal, such as image information including spatial information, as the teaching information. However, it is difficult for the user himself/herself to wear a camera that captures a face image (mouth) of the user who is speaking, and to always acquire a face image of the user who can move. On the other hand, the teaching information used in the embodiment is the user's utterance transmitted through the inner ear, the vibration of the speaker's skin, the movement of the muscles near the speaker's mouth, and the like, and it is easy for the user to wear or carry the sensor that observes them. For this reason, the embodiment can be easily applied even in a situation where the user moves.

In the present embodiment, since a signal synchronized with the user's utterance is used as the teaching information, it is possible to perform extraction with high accuracy even in a case where a clean voice of the user cannot be acquired. For this reason, it is also possible to easily allow multiple persons to share one signal processing device 10 or allow an unspecified number of persons to use the signal processing device 10 for short periods of time.

### <2. Modification>

While the embodiment of the present disclosure has been specifically described above, the contents of the present disclosure are not limited to the above-described embodiment, and various modifications based on the technical idea of the present disclosure are possible. Hereinafter, modifications will be described. Note that in the description of the modification, the same reference numerals are given to the same or similar configurations as those according to the above-described embodiment, and redundant description will be appropriately omitted.

### [Modification 1]

Modification 1 is an example in which the sound source extraction with teaching and the utterance section estimation are simultaneously estimated. In the above-described embodiment, the sound source extraction unit 12 generates the extraction result, and the utterance section estimation unit 14C generates the utterance section information on the basis of the extraction result. However, in Modification 1, the extraction result is generated concurrently with generation of the utterance section information.

The reason for performing such simultaneous estimation is to improve the accuracy of utterance section estimation in a case where the interference sound is also a voice. This point will be described with reference to Fig. 2. In a case where not only the target sound but also the interference sound is a voice, the recognition accuracy may be greatly reduced as compared with a case where the interference sound is a non-voice. One of the causes is failure in utterance section estimation. In a method of estimating the utterance section on the basis of whether or not the input sound is likely to be a voice, the target sound and the interference sound cannot be distinguished in a case where both the target sound and the interference sound are voices. Hence, a section in which only an interference sound exists is also detected as an utterance section, which leads to a recognition error. For example, as a result of detection of a long section including interference sounds present before and after the target sound as an utterance section, a recognition result may be obtained in which an unnecessary word string derived from the interference sound is connected before and after a word string derived from the original target sound. As a result of detection of a portion as an utterance section when only an interference sound is present, an unnecessary recognition result may be generated.

Even in a case where the utterance section estimation is performed on the extraction result of the sound source extraction unit 12, there is a possibility that the same problem occurs as long as there is a cancellation residue of the interference sound in the extraction result. That is, the extraction result is not necessarily an ideal signal from which the interference sound has been completely removed (see Fig. 2D), and a voice of a small volume derived from the interference sound may be connected before and after the target sound. When utterance section estimation is performed on such a signal, there is a possibility that a section longer than the true target sound is estimated as an utterance section, or a cancellation residue of the interference sound is detected as an utterance section.

The utterance section estimation unit 14C intends to improve the section estimation accuracy by using the teaching information derived from the auxiliary sensor 3 in addition to the extraction result that is the output of the sound source extraction unit 12. However, in a case where the interference sound that is a voice is mixed in the teaching information as well (e.g., interference sound 4B is also voice in Fig. 2B), there is still a possibility that a section longer than the original utterance is estimated as the utterance section.

In view of the above, when learning the neural network, not only the correspondence between the clean target sound and both inputs of the microphone observation signal and the teaching information is learned, but also the correspondence between the determination result as to whether it is inside or outside the utterance section and both inputs is learned. Then, when the signal processing device is used, generation of an extraction result and determination of an utterance section are performed simultaneously (two types of information are output) to solve the above-described problem. That is, even if there is a cancellation residue of an interference sound that is a voice in the extraction result, if the other output at that timing shows the determination result that it is "outside the utterance section", it is possible to avoid the problem that a portion where only the interference sound is present is estimated as an utterance section.

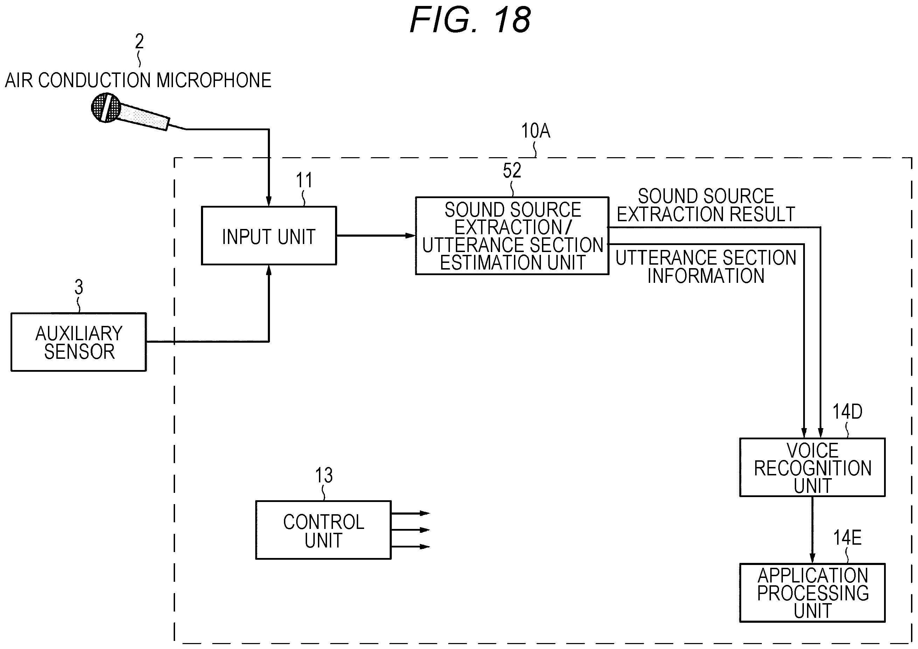

Fig. 18 is a diagram illustrating a configuration example of a signal processing device (signal processing device 10A) according to Modification 1. The difference between the signal processing device 10A illustrated in Fig. 18 and the signal processing device 10 specifically illustrated in Fig. 6 is that the sound source extraction unit 12 and the utterance section estimation unit 14C according to the signal processing device 10 are integrated and replaced with a module called a sound source extraction/utterance section estimation unit 52. There are two outputs of the sound source extraction/utterance section estimation unit 52. One is a sound source extraction result, and the sound source extraction result is sent to a voice recognition unit 14D. The other is utterance section information, and the utterance section information is also sent to the voice recognition unit 14D.

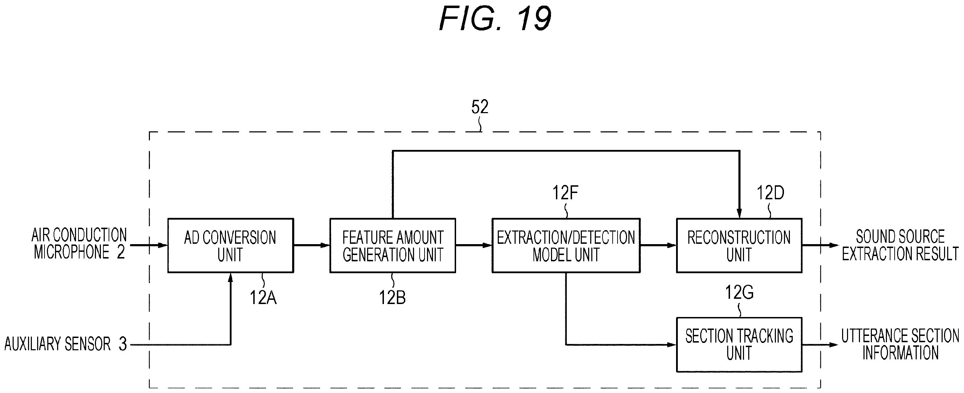

Fig. 19 illustrates details of the sound source extraction/utterance section estimation unit 52. The difference between the sound source extraction/utterance section estimation unit 52 and the sound source extraction unit 12 is that the extraction model unit 12C is replaced with an extraction/detection model unit 12F and that a section tracking unit 12G is newly provided. Other modules are the same as the modules of the sound source extraction unit 12.

There are two outputs of the extraction/detection model unit 12F. One output is output to a reconstruction unit 12D, and a target sound signal that is a sound source extraction result is generated. The other output is sent to the section tracking unit 12G. The latter data is a determination result of utterance detection, and is a determination result binarized for each frame, for example. In other words, the presence or absence of the user's utterance in the frame is expressed by a value of "1" or "0". Since it is the presence or absence of utterance but not the presence or absence of voice, the ideal value in a case where an interference sound that is a voice is generated at the timing when the user is not uttering is "0".

The section tracking unit 12G obtains utterance start time and end time, which are utterance section information, by tracking the determination result for each frame in the time direction. As an example of the processing, if the determination result of 1 continues for a predetermined time length or more, it is regarded as the start of an utterance, and similarly, if the determination result of 0 continues for a predetermined time length or more, it is regarded as the end of an utterance. Alternatively, instead of the method based on such a rule, tracking may be performed by a known method based on learning using a neural network.

In the above example, it has been described that the determination result output from the extraction/detection model unit 12F is a binary value, but a continuous value may be output instead, and binarization may be performed by a predetermined threshold in the section tracking unit 12G. The sound source extraction result and the utterance section information thus obtained are sent to the voice recognition unit 14D.

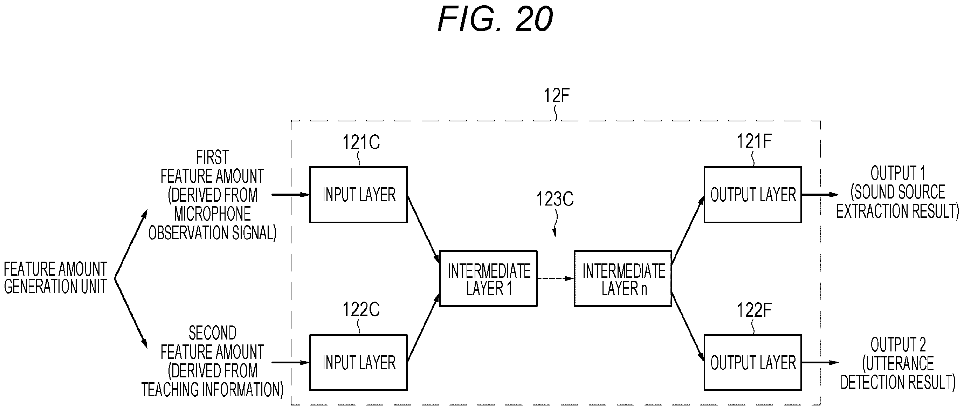

Next, details of the extraction/detection model unit 12F will be described with reference to Fig. 20. The extraction/detection model unit 12F is different from the extraction model unit 12C in that there are two types of output layers (output layer 121F and output layer 122F). The output layer 121F operates similarly to the output layer 124C of the extraction model unit 12C, thereby outputting data corresponding to the sound source extraction result. On the other hand, the output layer 122F outputs a determination result of utterance detection. Specifically, it is a determination result binarized for each frame.

While the branch on the output side occurs in an intermediate layer n that is the previous layer in Fig. 20, the branch may occur in an intermediate layer closer to the input layer than the intermediate layer n. In that case, the number of layers from the intermediate layer in which the branch occurs to each output layer may be different, and as an example, a network structure in which one of the output data is output from an intermediate layer may be used.

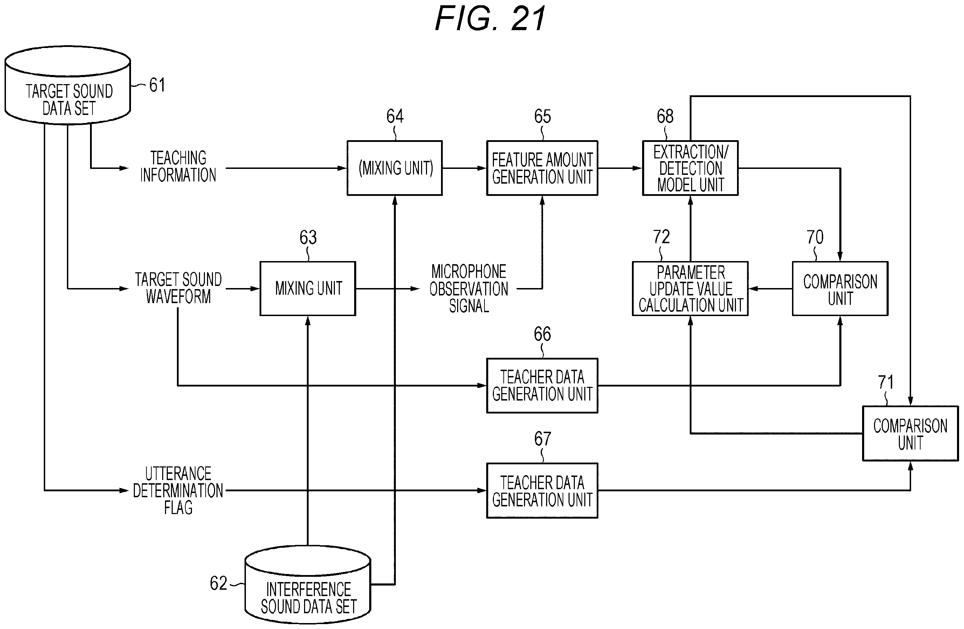

Next, a learning system of the extraction/detection model unit 12F will be described with reference to Fig. 21. The extraction/detection model unit 12F outputs two types of data unlike the extraction model unit 12C, and therefore needs to perform learning different from that of the extraction model unit 12C. Learning a neural network that outputs multiple types of data is called multi-task learning, and Fig. 21 is a type of multi-task learning machine. A known method can be applied to the multi-task learning.

A target sound data set 61 is a group including a set of the following three signals (a) to (c). (a) Target sound waveform (sound waveform including voice utterance that is target sound and silence of a predetermined length connected before and after voice utterance), (b) teaching information synchronized with (a), and (c) utterance determination flag synchronized with (a).

As an example of the above (c), a bit string generated by dividing (a) into predetermined time intervals (e.g., same time intervals as shift width of short-time Fourier transform of Fig. 9) and then assigning a value of "1" if there is an utterance within each time interval, and a value of "0" if there is no utterance within each time interval can be considered.

At the time of learning, one set is randomly extracted from the target sound data set 61, and the teaching information in the set is output to a mixing unit 64 (in a case where teaching information is acquired by air conduction microphone) or a feature amount generation unit 65 (in other cases), the target sound waveform is output to a mixing unit 63 and a teacher data generation unit 66, and the utterance determination flag is output to a teacher data generation unit 67. Additionally, one or more sound waveforms are randomly extracted from an interference sound data set 62, and the extracted sound waveforms are sent to the mixing unit 63. In a case where the teaching information is acquired by an air conduction microphone, the sound waveform of the interference sound is also sent to the mixing unit 64.

Since the extraction/detection model unit 12F outputs two types of data, teacher data for each type of data is prepared. The teacher data generation unit 66 generates teacher data corresponding to the sound source extraction result. The teacher data generation unit 67 generates teacher data corresponding to the utterance detection result. In a case where the utterance determination flag is the bit string as described above, the utterance determination flag can be used as it is as teacher data. Hereinafter, the teacher data generated by the teacher data generation unit 66 is referred to as teacher data 1D, and the teacher data generated by the teacher data generation unit 67 is referred to as teacher data 2D.

Since there are two types of outputs of the extraction/detection model unit 12F, two comparison units are also required. Of the two types of outputs, an output corresponding to the sound source extraction result is output to a comparison unit 70, and is compared with the teacher data 1D by the comparison unit 70. The operation of the comparison unit 70 is the same as that of the comparison unit 27 in Fig. 12 described above. On the other hand, an output corresponding to the utterance detection result is output to a comparison unit 71, and is compared with the teacher data 2D by the comparison unit 71. The comparison unit 71 also uses a loss function similarly to the comparison unit 70, but this is a loss function for learning a binary classifier.

A parameter update value calculation unit 72 calculates an update value for the parameter of the extraction/detection model unit 12F so that the loss value decreases from the loss values calculated by the two comparison units 70 and 71. As a parameter update method in multi-task learning, a known method can be used.

### [Modification 2]

In Modification 1 described above, it is assumed that the sound source extraction result and the utterance section information are individually sent to the voice recognition unit 14D side, and division into utterance sections and generation of a word string that is a recognition result are performed on the voice recognition unit 14D side. On the other hand, in Modification 2, data obtained by integrating the sound source extraction result and the utterance section information may be temporarily generated, and the generated data may be output. Hereinafter, Modification 2 will be described.

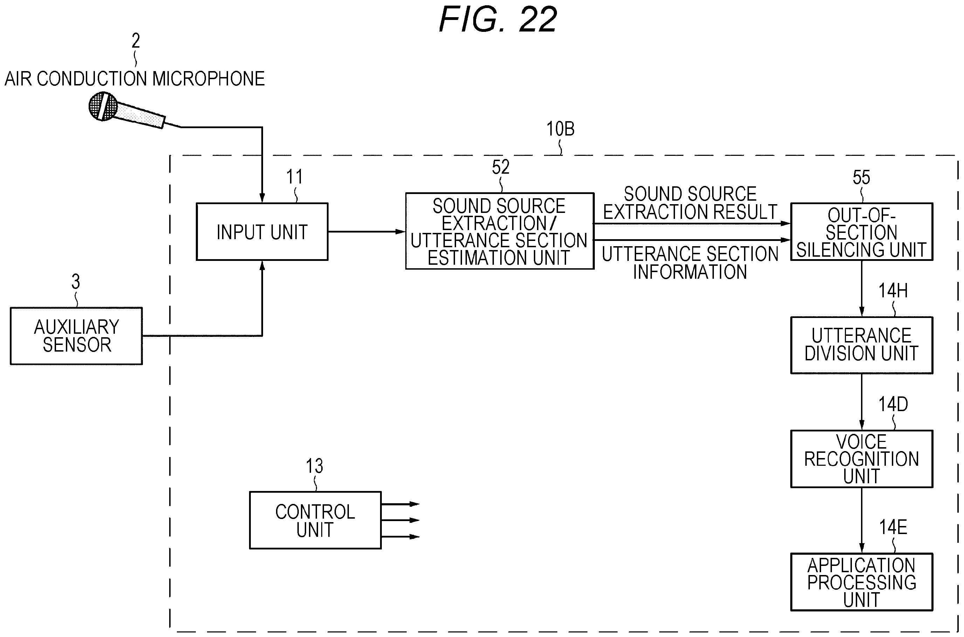

Fig. 22 is a diagram illustrating a configuration example of a signal processing device (signal processing device 10B) according to Modification 2. The signal processing device 10B is different from the signal processing device 10A in that in the signal processing device 10B, two types of data (sound source extraction result and utterance section information) output from a sound source extraction/utterance section estimation unit 52 are input to an out-of-section silencing unit 55, and the output of the out-of-section silencing unit 55 is input to a newly provided utterance division unit 14H or voice recognition unit 14D. Other configurations are the same as those of the signal processing device 10A.

The out-of-section silencing unit 55 generates a new sound signal by applying the utterance section information to the sound source extraction result that is a sound signal. Specifically, the out-of-section silencing unit 55 performs processing of replacing a sound signal corresponding to time outside the utterance section with silence or a sound close to silence. A sound close to silence is, for example, a signal obtained by multiplying the sound source extraction result by a positive constant close to 0. Additionally, in a case where sound reproduction is not performed, instead of replacing the sound signal with silence, the sound signal may be replaced with noise of a type that does not adversely affect the utterance division unit 14H and the voice recognition unit 14D in the subsequent stage.

The output of the out-of-section silencing unit 55 is a continuous stream, and in order to input the stream to the voice recognition unit 14D, the stream is handled by one of the following methods (1) and (2). (1) Add the utterance division unit 14H between the out-of-section silencing unit 55 and the voice recognition unit 14D. (2) Use voice recognition related to stream input, which is called sequential voice recognition. The utterance division unit 14H may be omitted in the case of (2). As the utterance division unit 14H, a known method (e.g., method described in Japanese Patent No. 4182444) can be applied.

A known method (e.g., method described in Japanese Patent Laid-Open 2012-226068) can be applied as the sequential voice recognition. Since a sound signal of silence (or sound that does not adversely affect operation in subsequent stage) is input in a section other than the section in which the user is speaking by the operation of the out-of-section silencing unit 55, the utterance division unit 14H or the voice recognition unit 14D to which the sound signal is input can operate more accurately than a case where the sound source extraction result is directly input. Additionally, by providing the out-of-section silencing unit 55 in the subsequent stage of the sound source/utterance section estimation unit 52, the sound source extraction with teaching of the present disclosure can be applied not only to a system including a sequential voice recognizing machine but also to a system in which the utterance division unit 14H and the voice recognition unit 14D are integrated.

When utterance section estimation is performed on the sound source extraction result, in a case where the interference sound is a voice as well, the utterance section estimation reacts to the cancellation residue of the interference sound, which may lead to erroneous recognition or generation of an unnecessary recognition result. In the modification, two pieces of estimation processing of sound source extraction and utterance section estimation are simultaneously performed, so that even if the sound source extraction result includes a cancellation residue of the interference sound, accurate utterance section estimation is performed independently of this, and as a result, the voice recognition accuracy can be improved.

### [Other modifications]

Other modifications will be described.

All or part of the processing in the signal processing device described above may be performed by a server or the like on a cloud. Additionally, the target sound may be a sound other than a voice uttered by a person (e.g., voice of robot or pet). Additionally, the auxiliary sensor may be attached to a robot or a pet other than a person. Additionally, the auxiliary sensor may be multiple auxiliary sensors of different types, and the auxiliary sensor to be used may be switched according to the environment in which the signal processing device is used. Additionally, the present disclosure can also be applied to generation of a sound source for each object.

Note that since the "mixing unit 24" in Fig. 12 and the "mixing unit 64" in Fig. 21 can be omitted depending on the type of auxiliary sensor, the "mixing unit 24" in Fig. 12 and the "mixing unit 64" in Fig. 21 are shown in parentheses.

Note that the contents of the present disclosure should not be interpreted as being limited by the effects exemplified in the present disclosure.

The present disclosure can also adopt the following configurations.
(1) A signal processing device including:
   an input unit to which a microphone signal including a mixed sound in which a target sound and a sound other than the target sound are mixed and a one-dimensional time-series signal acquired by an auxiliary sensor and synchronized with the target sound are input; and
   a sound source extraction unit that extracts a target sound signal corresponding to the target sound from the microphone signal on the basis of the one-dimensional time-series signal.
(2) The signal processing device according to (1), in which
   the sound source extraction unit extracts the target sound signal using teaching information generated on the basis of the one-dimensional time-series signal.
(3) The signal processing device according to (1) or (2), in which
   the auxiliary sensor includes a sensor attached to a source of the target sound.
(4) The signal processing device according to any one of (1) to (3), in which
   the microphone signal includes a signal detected by a first microphone, and
   the auxiliary sensor includes a second microphone different from the first microphone.
(5) The signal processing device according to (4), in which
   the first microphone includes a microphone provided outside a housing of a headphone, and the second microphone includes a microphone provided inside the housing.
(6) The signal processing device according to any one of (1) to (4), in which
   the auxiliary sensor includes a sensor that detects a sound wave propagating in a body.
(7) The signal processing device according to any one of (1) to (4), in which
   the auxiliary sensor includes a sensor that detects a signal other than a sound wave.
(8) The signal processing device according to (7), in which
   the auxiliary sensor includes a sensor that detects movement of a muscle.
(9) The signal processing device according to any one of (1) to (8) further including
   a reproduction unit that reproduces the target sound signal extracted by the sound source extraction unit.
(10) The signal processing device according to any one of (1) to (8) further including
   a communication unit that transmits the target sound signal extracted by the sound source extraction unit to an external device.
(11) The signal processing device according to any one of (1) to (8) further including:
   an utterance section estimation unit that estimates an utterance section indicating presence or absence of an utterance on the basis of an extraction result by the sound source extraction unit and generates utterance section information that is a result of the estimation; and
   a voice recognition unit that performs voice recognition in the utterance section.
(12) The signal processing device according to any one of (1) to (8), in which
   the sound source extraction unit is further configured as a sound source extraction/utterance section estimation unit that estimates an utterance section indicating presence or absence of an utterance and generates utterance section information that is a result of the estimation, and
   the sound source extraction/utterance section estimation unit outputs the target sound signal and the utterance section information.
(13) The signal processing device according to (12) further including
   an out-of-section silencing unit that determines a sound signal corresponding to a time outside an utterance section in the target sound signal on the basis of the utterance section information output from the sound source extraction/utterance section estimation unit and silences the determined sound signal.
(14) The signal processing device according to any one of (1) to (8), (11), or (12) in which
   the sound source extraction unit includes an extraction model unit that receives a first feature amount based on the microphone signal and a second feature amount based on the one-dimensional time-series signal as inputs, performs forward propagation processing on the inputs, and outputs an output feature amount.
(15) The signal processing device according to any one of (1) to (8), (12), or (13), in which
   the sound source extraction unit includes an extraction/detection model unit that receives a first feature amount based on the microphone signal and a second feature amount based on the one-dimensional time-series signal as inputs, performs forward propagation processing on the inputs, and outputs a plurality of output feature amounts.
(16) The signal processing device according to (14) or (15) further including
   a reconstruction unit that generates at least the target sound signal on the basis of the output feature amount.
(17) The signal processing device according to (14) or (15), in which
   a correspondence between an input feature amount and the output feature amount is learned in advance.
(18) A signal processing method including:
   inputting a microphone signal including a mixed sound in which a target sound and a sound other than the target sound are mixed and a one-dimensional time-series signal acquired by an auxiliary sensor and synchronized with the target sound to an input unit; and
   extracting a target sound signal corresponding to the target sound from the microphone signal on the basis of the one-dimensional time-series signal by a sound source extraction unit.
(19) A program for causing a computer to execute a signal processing method including:
   inputting a microphone signal including a mixed sound in which a target sound and a sound other than the target sound are mixed and a one-dimensional time-series signal acquired by an auxiliary sensor and synchronized with the target sound to an input unit; and
   extracting a target sound signal corresponding to the target sound from the microphone signal on the basis of the one-dimensional time-series signal by a sound source extraction unit.

### REFERENCE SIGNS LIST

- 2: Air conduction microphone
- 3: Auxiliary sensor
- 10, 10A, 10B: Signal processing device
- 11: Input unit
- 12: Sound source extraction unit
- 12C: Extraction model unit
- 12D: Reconstruction unit
- 14A: Sound reproducing unit
- 14B: Communication unit
- 32, 33, 42, 44: Microphone
- 52: Sound source extraction/utterance section estimation unit
- 55: Out-of-section silencing unit

## Claims

1. A signal processing device comprising:
an input unit to which a microphone signal including a mixed sound in which a target sound and a sound other than the target sound are mixed and a one-dimensional time-series signal acquired by an auxiliary sensor and synchronized with the target sound are input; and
a sound source extraction unit that extracts a target sound signal corresponding to the target sound from the microphone signal on a basis of the one-dimensional time-series signal.

2. The signal processing device according to claim 1, wherein
the sound source extraction unit extracts the target sound signal using teaching information generated on a basis of the one-dimensional time-series signal.

3. The signal processing device according to claim 1, wherein
the auxiliary sensor includes a sensor attached to a source of the target sound.

4. The signal processing device according to claim 1, wherein
the microphone signal includes a signal detected by a first microphone, and
the auxiliary sensor includes a second microphone different from the first microphone.

5. The signal processing device according to claim 4, wherein
the first microphone includes a microphone provided outside a housing of a headphone, and the second microphone includes a microphone provided inside the housing.

6. The signal processing device according to claim 1, wherein
the auxiliary sensor includes a sensor that detects a sound wave propagating in a body.

7. The signal processing device according to claim 1, wherein
the auxiliary sensor includes a sensor that detects a signal other than a sound wave.

8. The signal processing device according to claim 7, wherein
the auxiliary sensor includes a sensor that detects movement of a muscle.

9. The signal processing device according to claim 1 further comprising
a reproduction unit that reproduces the target sound signal extracted by the sound source extraction unit.

10. The signal processing device according to claim 1 further comprising
a communication unit that transmits the target sound signal extracted by the sound source extraction unit to an external device.

11. The signal processing device according to claim 1 further comprising:
an utterance section estimation unit that estimates an utterance section indicating presence or absence of an utterance on a basis of an extraction result by the sound source extraction unit and generates utterance section information that is a result of the estimation; and
a voice recognition unit that performs voice recognition in the utterance section.

12. The signal processing device according to claim 1, wherein
the sound source extraction unit is further configured as a sound source extraction/utterance section estimation unit that estimates an utterance section indicating presence or absence of an utterance and generates utterance section information that is a result of the estimation, and
the sound source extraction/utterance section estimation unit outputs the target sound signal and the utterance section information.

13. The signal processing device according to claim 12 further comprising
an out-of-section silencing unit that determines a sound signal corresponding to a time outside an utterance section in the target sound signal on a basis of the utterance section information output from the sound source extraction/utterance section estimation unit and silences the determined sound signal.

14. The signal processing device according to claim 1, wherein
the sound source extraction unit includes an extraction model unit that receives a first feature amount based on the microphone signal and a second feature amount based on the one-dimensional time-series signal as inputs, performs forward propagation processing on the inputs, and outputs an output feature amount.

15. The signal processing device according to claim 1, wherein
the sound source extraction unit includes an extraction/detection model unit that receives a first feature amount based on the microphone signal and a second feature amount based on the one-dimensional time-series signal as inputs, performs forward propagation processing on the inputs, and outputs a plurality of output feature amounts.

16. The signal processing device according to claim 14 further comprising
a reconstruction unit that generates at least the target sound signal on a basis of the output feature amount.

17. The signal processing device according to claim 14, wherein
a correspondence between an input feature amount and the output feature amount is learned in advance.

18. A signal processing method comprising:
inputting a microphone signal including a mixed sound in which a target sound and a sound other than the target sound are mixed and a one-dimensional time-series signal acquired by an auxiliary sensor and synchronized with the target sound to an input unit; and
extracting a target sound signal corresponding to the target sound from the microphone signal on a basis of the one-dimensional time-series signal by a sound source extraction unit.

19. A program for causing a computer to execute a signal processing method comprising:
inputting a microphone signal including a mixed sound in which a target sound and a sound other than the target sound are mixed and a one-dimensional time-series signal acquired by an auxiliary sensor and synchronized with the target sound to an input unit; and
extracting a target sound signal corresponding to the target sound from the microphone signal on a basis of the one-dimensional time-series signal by a sound source extraction unit.
